# EUROPEAN PATENT APPLICATION

(11) **EP 0 675 363 A2**
(43) Date of publication of application: **04.10.1995**
(21) Application number: 95200633.6
(22) Date of filing: 16.03.1995
(51) Int. Cl.: G01P 1/02, G01P 15/08

(54) **Accelerometer assembly**

(30) Priority: 31.03.1994 US 220864
(71) Applicant: DELCO ELECTRONICS CORPORATION, Kokomo Indiana 46902 (US)
(72) Inventor: Schwarz, Dwight Lance, Kokomo, IN 46902 (US); Wilson, Richard Allen, Kokomo, IN 46902 (US); Maki, William Martin, Ft. Wayne, IN 46804 (US)
(74) Representative: Denton, Michael John

(57) **Abstract**

A microaccelerometer package (10) houses a microaccelerometer (18) and associated signal conditioning circuitry (20) and is suitable for use in on-board automotive safety control and navigational systems and to isolate the microaccelerometer (18) from extraneous vibrations and package-induced stresses. The package (10) includes a lead frame (16), initially a one-piece strip frame, integrally moulded with a housing (12) to form the package (10). The lead frame (16) enhances the rigidity of the package so as to have a high natural frequency, enabling the microaccelerometer (18) to respond properly to the frequency range of interest, while minimising the influence of extraneous road and vehicle vibrations. Use of the lead frame (16) also results in a compact microaccelerometer package (10) with minimal package-induced stresses on the microaccelerometer (10) so that a more reliable signal output is provided by the microaccelerometer.

## Description

This invention relates to an accelerometer assembly for use, for example, in sensing deceleration for the purpose of deploying a supplementary inflatable restraint in an automobile.

An accelerometer is one of the primary sensors used in on-board automotive safety control systems and navigational systems, particularly crash sensing systems. Examples of such automotive applications include anti-lock braking systems, active suspension systems, supplemental inflatable restraint systems such as air bags, and seat belt lock-up systems. An accelerometer is a device which measures acceleration, or more accurately, the force that is exerted by a body as the result of a change in the velocity of the body. A moving body possesses inertia which tends to resist the change in velocity. It is this resistance to any change in velocity that is the source of the force which is exerted by the moving body. This force is directly proportional to the acceleration component in the direction of movement when the moving body is accelerated.

In the past, electromechanical and electronic accelerometers have been widely used in the automotive industry to detect an automobile's deceleration. More recently, micro-machined accelerometers which employ piezoresistive microbridges have been used. Such accelerometers detect acceleration in the plane perpendicular to a plane through a proof mass and the microbridge which supports the proof mass. Acceleration and deceleration of the vehicle cause a compressive or tensile load on piezoresistive elements embedded in the microbridge which supports the proof mass, depending on which direction the acceleration or deceleration is applied within that plane. It is the accelerating force on the support system for the proof mass, and the proof mass inertia, which generates compressive or tensile loads on the piezoresistive elements. In turn, the resulting compressive and tensile loads change the electrical resistance of the piezoresistive elements embedded in the microbridge. This change in electrical resistance can be sensed to determine the magnitude of the acceleration component perpendicular to the plane of the common axis shared by the piezoresistive elements.

Piezoresistive accelerometers are capable of extremely precise measurements, and are therefore desirable for use in automotive applications. However, they should be adequately packaged to protect the micro-machined accelerometer from an automobile's harsh environment. In particular, the accelerometer should be isolated from the mechanical stresses with its mounting package, and reasonably isolated from the extraneous road and vehicle vibrations during use. For example, the packaging for the accelerometer should be sufficiently rigid such that its resonant frequency lies above the frequency range to be detected. An accelerometer intended to detect acceleration or deceleration of a vehicle would require that it be reasonably insensitive to jarring of the vehicle due to rough road surfaces, low speed collisions, and the like.

The accelerometer's packaging should isolate the accelerometer from the harsh automotive environment, such as salt, grease, dust and moisture, yet be easy to assemble in order to reduce material and assembly costs, such that the accelerometer package is amenable to high volume, low cost automotive production techniques. The above features are complicated by the desire for accelerometer packaging to be small and compact, while also providing an inert protective atmosphere for the micro-machined accelerometer. One approach has been to form the accelerometer package by overmoulding the accelerometer with a suitable plastic material. However, a drawback of this approach is the significant package-induced stresses which are created as a result of the different coefficients of thermal expansion for the materials used.

US-A-5,233,871 discloses a microaccelerometer package in which a micro-machined accelerometer and its associated signal conditioning and processing circuitry are packaged within a three piece housing in a manner which minimises space requirements, yet does not involve overmoulding the accelerometer. The accelerometer and the signal processing circuitry are positioned and secured relative to each other on a pair of recessed surfaces within the package, such that each is rigidly secured to the package and is isolated from extraneous vibrations which are transmitted to the package from the environment. During processing, the signal processing circuitry advantageously remains accessible for final trimming and tuning procedures prior to sealing the package. The accelerometer and the signal processing circuitry are also positioned relative to each other so as to minimise the length of the electrical conductors required to electrically connect them, which facilitates automated procedures for attaching the electrical conductors to their wire bond sites.

Though the packaging of US-A-5,233,871 provides a small compact assembly which is amenable to automotive production techniques, it would be highly desirable if further reductions in packaging size and manufacturing complexity and costs could be achieved.

The present invention seeks to provide an improved accelerometer assembly.

According to an aspect of the present invention, there is provided an accelerometer assembly as specified in claim 1.

It is possible in some embodiments to provide a cost-efficient microaccelerometer package suitable for use in automotive applications while also being amenable to automotive production techniques.

Preferably, there is provided a microaccelerometer package which includes a housing in which both a microaccelerometer and signal processing circuitry necessary to condition the output signal of the microaccelerometer are enclosed.

Preferably, the package is capable of isolating the microaccelerometer from extraneous vibrations and package-induced stresses, while also being small and lightweight.

Such a package may be formed with an electrically conductive frame structure which forms connector pins and bond sites for the accelerometer and signal processing circuitry, while also promoting the structural rigidity of the package.

Preferably, the frame structure forms braces which are configured to support the microaccelerometer package and/or serve as an electrical ground for the package.

In a preferred embodiment, a microaccelerometer package is provided for housing a microaccelerometer and its associated signal conditioning circuitry. This microaccelerometer package is constructed to be suitably rugged for use in on-board automotive safety control and navigational systems, so as to be capable of isolating the microaccelerometer from extraneous vibrations and package-induced stresses, yet also be small, lightweight, and amenable to mass production techniques. To achieve the above, the microaccelerometer package includes a lead frame which is initially a one-piece strip frame integrally moulded with a plastic housing to form the primary structure of the package. The lead frame can enhance the rigidity of the package so as to result in a high natural frequency of the package, thereby enabling the microaccelerometer to respond properly to the frequency range of interest, while also minimising the influence of extraneous road and vehicle vibrations on the microaccelerometer. Use of the lead frame can also result in a compact microaccelerometer package that imposes minimal package-induced stresses on the microaccelerometer. As a result, a more reliable signal output can be provided by the microaccelerometer for indicating an automobile's acceleration or deceleration.

In this embodiment, the microaccelerometer package generally includes a plastic housing, a lead frame which is integrally moulded with the housing, a cover, and mechanical braces for supporting the package. A cavity is formed in the housing to receive the microaccelerometer and its associated signal processing circuitry. The lead frame is formed from an electrically conductive material, and is composed of several separate portions which originally formed a unitary strip frame at the time the lead frame was moulded with the housing. As finished, the lead frame is composed of separate portions, one of which primarily serves a structural function while the other primarily serves an electrical function. The structural portion of the lead frame forms a backplate for supporting the microaccelerometer and signal processing circuitry within the cavity of the housing. The structural portion of the lead frame also projects from the housing so as to form the mechanical braces which enable the package to be rigidly mounted to the vehicle. The braces serve to enhance the rigidity of the microaccelerometer package, while also serving as a ground for the microaccelerometer and the signal processing circuitry. The electrical portion of the lead frame is composed of a number of leads which project from the housing, and form input/output pins or terminal blades for the package as well as internal bond sites for the electrical conductors which electrically interconnect the microaccelerometer and the signal processing circuitry with the input/output leads. The cover serves to enclose and seal the signal processing circuitry and the microaccelerometer within the housing and from the automotive environment.

The microaccelerometer and the signal conditioning circuitry are preferably adhered directly to the backplate with a resilient material which minimises the transfer of package stresses to the microaccelerometer and the signal conditioning circuitry. In the preferred embodiment, the microaccelerometer is a micro-machined all-silicon accelerometer, and the signal processing circuitry is a programmable silicon semiconductor chip. Several of the leads which extend through a wall of the housing may transmit the microaccelerometer's conditioned signal from the signal processing circuitry to the associated automotive system, such as a supplemental inflatable restraint system, an anti-lock braking system, an active suspension system, or a seat belt lock-up system. Several other leads are available through which calibration can be performed on the signal processing circuitry after the package is fully assembled.

Preferably, the lead frame serves a dual purpose. The lead frame forms the leads by which the output of the microaccelerometer is transmitted from the microaccelerometer package to its associated vehicle system. In addition, the lead frame also forms an integral structural member of the package which significantly increases the rigidity of the package, and therefore the accuracy and reliability of the output signal. As a result, additional structural components which must be assembled with the package are not required. In addition, the rigidity of the package is particularly enhanced because the lead frame is formed from metal, which also allows the braces to serve as an electrical ground for the package.

It is possible for the size of the microaccelerometer package and the cost to produce the package to be minimised due to the package being composed essentially of the overmoulded lead frame. In addition, this can minimise the costs associated with the assembly of the microaccelerometer. No additional structural components may be needed which may otherwise undesirably contribute to the size of the microaccelerometer package, as well as complicate the assembly of the package and increase the cost of the package. The microaccelerometer package may be constructed in a manner which substantially isolates the microaccelerometer from extraneous vibrations and package-induced stresses, such that the microaccelerometer may be capable of properly sensing the automobile's acceleration or deceleration, this being particularly desirable in a hostile automotive environment.

An embodiment of the present invention is described below, by way of example only, with reference to the accompanying drawings, in which:
Figure 1 is a perspective view of an embodiment of microaccelerometer package;
Figure 2 is a plan view of a lead frame forming structural and electrical members of the microaccelerometer package of Figure 1;
Figure 3 is a plan view of the lead frame of Figure 2 after being overmoulded to form a housing therewith; and
Figure 4 is a cross-sectional view of the overmoulded lead frame of Figure 3 along line 4--4.

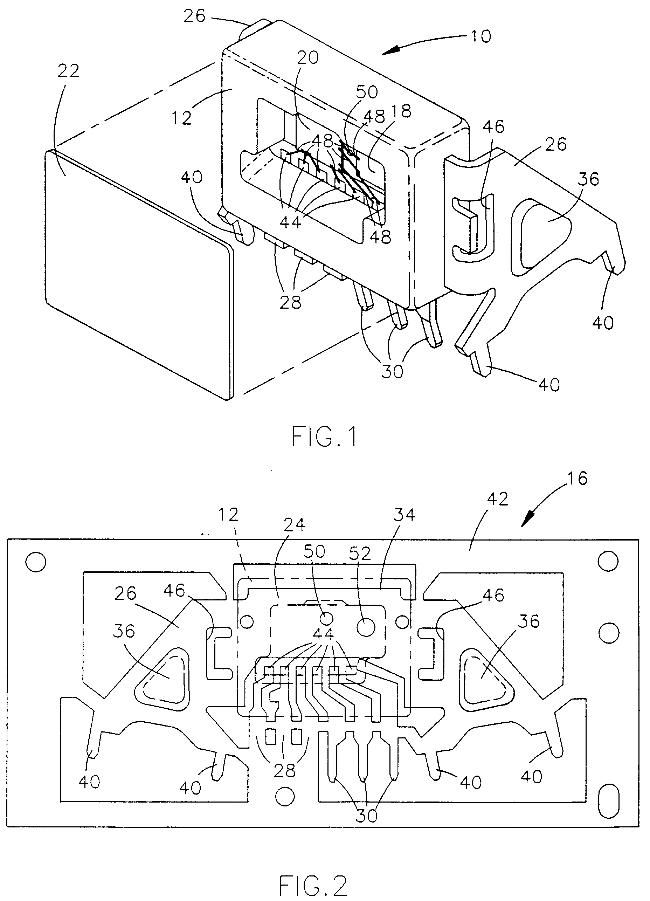

With reference to Figure 1, the microaccelerometer package 10 shown houses a microaccelerometer 18 and its associated signal processing circuitry 20. As will become apparent, the package 10 is particularly suitable for use in on-board automotive safety control and navigational systems, such as a supplemental inflatable restraint system, an anti-lock braking system, an active suspension system, or a seat belt lock-up system. Those skilled in the art will appreciate that other applications for the microaccelerometer package 10 are entirely foreseeable.

The microaccelerometer package 10 generally includes a housing 12 in which a recess 14 is formed for receiving the microaccelerometer 18 and the signal processing circuitry 20, and a pair of braces 26 which extend from opposite ends of the housing 12. A pair of feet 40 extend from each of the braces 26 as shown, by which the package 10 can be securely mounted and grounded to a circuit board (not shown). The package 10 also includes a set of input/output terminal blades 30 and programming terminal blades 28 which project through a wall of the housing 12, and a cover 22 which serves to seal the recess 14 and its contents from the surrounding environment. The microaccelerometer 18 and the signal processing circuitry 20 are supported on a backplate 24 which forms a support surface within the recess 14. The housing 12 is preferably formed from an engineering plastic, such as a 30% glass-filled polyester, while the cover 22 may be formed from a suitable material, such as mylar or other plastic material or a light weight metal, such as an aluminium alloy. The backplate 24, the braces 26, and the terminal blades 28 and 30 are all formed from the same electrically-conductive material, which is preferably a corrosion resistant metal such as a nickel-plated steel or a nickel iron alloy.

The signal processing circuitry 20 is preferably a programmable silicon semiconductor chip, although other techniques could also foreseeably be used and any suitable semiconductor chip could be used. The microaccelerometer 18 is preferably a bulk micro-machined accelerometer which employs a cantilevered proof mass (not shown) which operates on the piezoresistive effect, though it is foreseeable that other microaccelerometer designs could be employed. The micro-machined accelerometer is preferably a three-layer all-silicon structure which is bonded together using a combination of silicon direct bond and glass frit technologies of the type known in the art. However, it is foreseeable that other microaccelerometer designs and technologies could be suitably adapted for use with the package 10.

The microaccelerometer unit 18 and the signal processing circuitry 20 are electrically connected to each other and to the terminal blades 28 and 30 with a number of conductors 48. The conductors 48 are preferably formed by known wire bonding techniques, and will typically have a diameter of about 0.04 millimetre. The conductors 48 allow the microaccelerometer's input power and output signal to be transmitted from and to the signal processing circuitry 20 for signal conditioning and processing. The conditioned output signal is then transmitted via conductors 48 to the input/output terminal blades 30 from which the signal can be delivered to the intended vehicle system. Conductors 48 also electrically connect the signal processing circuitry 20 to the programming terminal blades 28, allowing the offset and gain of the signal processing circuitry 20 to be calibrated using known Zener Diode shorting techniques after the package 10 is fully assembled. Conductors 48 also ground both the microaccelerometer 18 and the signal processing circuitry 20 to a ground bond site 50 on the backplate 24.

As shown in Figures 2 to 4, the backplate 24, braces 26, and the terminal blades 28 and 30 preferably are all formed by a single lead frame 16 which is integrally moulded with the housing 12. Consequently, assembly of the microaccelerometer package 10 is greatly simplified in that the structural components of the package 10 are formed by only two members, the housing 12 and the lead frame 16. The inherent strength of the lead frame 16 contributes significant rigidity to the package 10, thereby increasing the natural frequency of the package 10 to about 4000 hertz or more. Consequently, the microaccelerometer 18 is substantially unaffected by vibrational noise that would otherwise result in a false vibration signal being generated by the microaccelerometer 18. In addition, the enhanced rigidity of the package 10 reduces the amount of stress transferred to the microaccelerometer 18 if the package 10 is secured to an uneven mounting structure within the automobile.

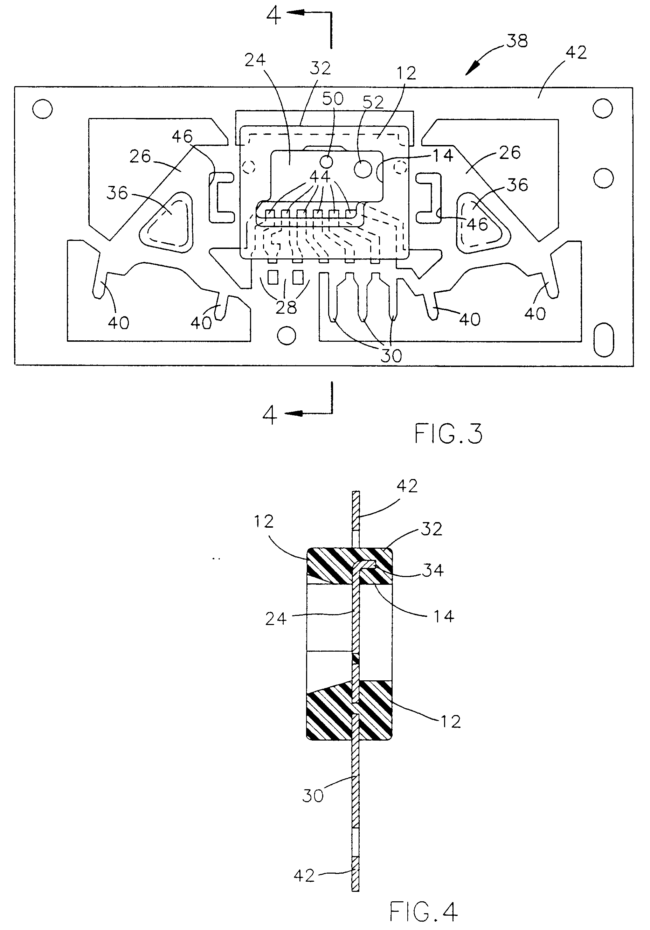

As best seen in Figure 2, the lead frame 16 is processed in strip form, and is composed of a frame 42 which supports the structure that will subsequently form the backplate 24, the braces 26 and the terminal blades 28 and 30. The lead frame 16 also forms a flange 34 which projects from one edge of the backplate 24. As shown in Figure 4, the flange 34 is bent to be roughly perpendicular to the plane of the lead frame 16 in order to contribute greater rigidity to the backplate 24 and the package 10. The rigidity of each brace 26 is preferably enhanced by forming a raised surface or rib 36 therein, as shown in Figures 2 and 3. In order to create flat ground tabs for test and calibration purposes, cutouts 46 are formed in each of the braces 26 in the area in which the bend will be formed. Finally, a pedestal or weld button 52 is preferably added to the backplate 24 where the microaccelerometer 18 is to be secured, and projects about 0.4 to about 0.5 millimetre from the surface of the backplate 24 such that the microaccelerometer 18 will be spaced a like distance from the surface of the backplate 24. Though the weld button 52 is not necessary, it serves to enhance the isolation of the microaccelerometer 18 from stresses which may be induced through the housing 12 or the backplate 24.

As noted above, the lead frame 16 is integrally moulded with the housing 12 to form an overmoulded housing and frame assembly 38, shown in Figure 3. Prior to the moulding operation, bond sites are preferably formed on the lead frame 16 to which the conductors 48 can be bonded using known wire bonding techniques. The portion of each terminal blade 28 and 30 which extends into the recess 14 of the housing 12 forms a wire bond site 44 which corresponds with a wire bond site provided on the microaccelerometer 18 or the signal processing circuitry 20. As noted above, a wire bond site is also provided on the microaccelerometer 18 and the signal processing circuitry 20 to allow their grounding with conductors 48 to the ground bond site 50 formed on the backplate 24. The microaccelerometer 18 and the signal processing circuitry 20 are then ground through the braces 26 to the circuit board (not shown) to which the package 10 is mounted.

As is known to those skilled in the art, the wire bonding process attaches one end of each conductor 48 to a bond site formed on the microaccelerometer 18 or the signal conditioning circuitry 20, or one of the corresponding bond sites 44 or 50, and then dispenses the conductor 48 as it travels to the corresponding wire bond site where it secures the opposite end of the conductor 48. Preferably, the wire bond sites 44 and 50 are provided with a soft gold plating in accordance with known plating methods so as to allow the use of gold wire for the conductors 48. However, other precious metals such as silver or palladium could be used instead of gold as the plating metal for the wire bond sites 44 and 50. In addition, aluminium wire conductors could be used instead of the gold wire conductors 48, which would make unnecessary the use of soft gold or other precious metals as the plating material at the wire bond sites 44 and 50. Those skilled in the art will also recognise that metal cladding methods could be employed to form the wire bond sites 44 and 50 instead of a plating method.

The housing 12 can be formed by overmoulding the lead frame 16 in a conventional manner to form the housing and frame assembly 38 shown in Figure 3. As shown in Figure 4, the flange 34 is embedded within a wall 32 of the housing 12, while the terminal blades 28 and 30 project through an opposite wall of the housing 12. To complete the assembly of the accelerometer package 10 shown in Figure 1, the microaccelerometer 18 and the signal processing circuitry 20 are secured in place on the backplate 24, preferably with a suitable adhesive, such as a silicone adhesive, for example Dow Corning's HIPEC SDA 6501, which will remain relatively soft and therefore will transmit little packaging stress to the microaccelerometer 18 and the signal processing circuitry 20. The microaccelerometer 18 is adhered to the weld button 52 (if present on the backplate 24), such that the microaccelerometer 18 is spaced above the backplate 24. The semiconductor signal processing circuitry 20 is positioned on the backplate 24 and permanently secured thereto with the preferred adhesive.

The conductors 48 are then appropriately formed to electrically interconnect the microaccelerometer 18, the signal processing circuitry 20, and the wire bond sites 44 and 50. The recess 14 in the housing 12 is then filled with a very soft dielectric passivation gel (not shown), preferably a UV-curable silicone gel, such as Dow Corning's 3-6371, to protect both the microaccelerometer 18 and the signal processing circuitry 20. The gel is very compliant for purposes of minimising stresses transferred from the housing 12 as well as minimising stresses due to thermal expansion and contraction of the gel in relation to the internal components of the microaccelerometer package 10. An air gap of approximately one millimetre is left between the cover 22 and the gel to provide for thermal expansion and the like. The cover 22 is preferably attached to the housing 12 so as to provide complete adhesive contact along and between the entire perimeters of the cover 22 and the housing 12. In a preferred embodiment, the cover 22 is a mylar label having a thickness of about 0.1 to about 0.3 millimetre, with a front surface printed with part identification and date code information, and a back surface coated with an acrylic pressure sensitive adhesive for bonding the cover 22 to the housing 12. Finally, the braces 26 and blade terminals 28 and 30 are trimmed from the frame 42 of the lead frame 16, and the braces 26 are bent roughly perpendicular to the housing 12, to achieve the package 10 illustrated in Figure 1. Thereafter, the offset and gain of the signal processing circuitry 20 can be calibrated through the programming terminal blades 28, and diagnostic testing of the accelerometer package 10 can be conducted through the input/output terminal blades 30.

From the above it can be seen that both the accelerometer 18 and the signal processing circuitry 20 are enclosed within a microaccelerometer package 10 which can be readily manufactured to be small, light weight and relatively inexpensive, yet is also very rigid and capable of isolating the microaccelerometer 18 from extraneous vibrations. The rigidity of the package 10 is determined primarily by the housing 12 and particularly the lead frame 16 which forms the backplate 24, braces 26 and terminal blades 28 and 30 of the package 10. Accordingly, there is no requirement to assemble additional structural components which would otherwise undesirably contribute to the size of the microaccelerometer package 10, as well as complicate the assembly of the package 10 and increase its assembly cost. Consequently, the microaccelerometer package 10 is suitable for use in automotive applications, such as supplemental inflatable restraint systems, anti-lock braking systems, active suspension systems, or seat belt lock-up systems, in which both sensing precision and minimal package size are highly desirable.

The lead frame 16 serves a dual role by forming the terminal blades 28 and 30 by which the output of the microaccelerometer 18 and signal conditioning circuitry 20 is transmitted from the microaccelerometer package 10 to its associated vehicle system, and by forming an integral structural member of the package 10 which significantly increases the rigidity of the package 10, and therefore the accuracy and reliability of the output signal. The rigidity of the package 10 is particularly enhanced when the lead frame 16 is formed from metal. Thus, the backplate 24 and the braces 26 are extremely rigid and strong, with additional improvements in strength and rigidity being made possible by forming ribs 36 in the braces 26 and embedding the flange 34 in the housing 12. In addition, because the braces 26 are made from an electrically conductive metal, they are also able to serve as an electrical ground for the package 10.

The package 10 can substantially isolate the microaccelerometer 18 and the signal processing circuitry 20 from package-induced stresses. Both the microaccelerometer 18 and the signal processing circuitry 20 are adhered to the backplate 24 with a soft adhesive which will transmit little packaging stress to the microaccelerometer 18 and the signal processing circuitry 20. Further isolation of the microaccelerometer 18 can be achieved by placing the microaccelerometer 18 on a pedestal, such as the weld button 52. Finally, the package 10 can be filled with a very soft silicone gel to isolate further the microaccelerometer 18 and the signal processing circuitry 20 from the environment within the package 10.

The above structural characteristics can minimise the development of extraneous vibrations and mechanical stresses and their amplification in the vicinity of the microaccelerometer 18, such that the micro-machined accelerometer responds almost exclusively to the vehicle dynamics associated with acceleration and deceleration of the automobile. Short distances between the wire bonding sites 44 and 50 and the microaccelerometer 16 and signal processing circuitry 20 can facilitate automated wire bonding procedures employed for forming and attaching the conductors 48, and the signal processing circuitry 20 can be calibrated after the package 10 has been completed through the programming terminal blades 28. Such an advantage allows for "on chip" calibration of offset and gain for the purpose of correcting any signal output errors resulting from manufacturing and processing of the individual elements of both the signal processing circuitry 20 and the microaccelerometer 18 due to tolerances and thermal or mechanically induced stresses.

The described embodiments could be made with modified or alternative materials, or with modified processing parameters. Furthermore, the geometry, size and shape of the lead frame 16 and the housing 12 could differ considerably from that shown, and still achieve vibrational and mechanical stress isolation for the microaccelerometer 18 and the signal processing circuitry 20.

The disclosures in United States patent application 08/220,864, from which this application claims priority, and in the abstract accompanying this application are incorporated herein by reference.

## Claims

1. An accelerometer assembly comprising a housing (12) including a cavity (14) therein; a lead frame (16) moulded to the housing so as to form a backplate (24) within the cavity and including at least one brace (26) and a plurality of electrically conductive leads (28,30) projecting from the housing; an acceleration sensing device (18) supported within the cavity; and signal conditioning circuitry (20) electrically coupled to the acceleration sensing device and to at least one of the conductive leads.

2. An accelerometer assembly according to claim 1, wherein the acceleration sensing device comprises a bulk micro-machined microaccelerometer with a cantilevered proof mass.

3. An accelerometer assembly according to claim 1 or 2, wherein the signal conditioning circuitry and acceleration sensing device are bonded to the back plate (24) with a silicone adhesive.

4. An accelerometer assembly according to claim 1, 2 or 3, wherein the or a brace (26) provides an electrical ground for the assembly.

5. An accelerometer assembly according to any preceding claim, wherein the electrically conductive leads include programming pins and diagnostic input/output terminals.

6. An accelerometer assembly according to any preceding claim, wherein the signal conditioning circuit is electrically connected between at least one of a plurality of wire bond sites of the acceleration sensing device and to at least one of the conductive leads so as to apply a conditioned version of the output signal of the acceleration sensing device to said at least one conductive lead.

7. An accelerometer assembly according to claim 6, comprising a first plurality of electrical conductors (48) connecting the wire bond sites of the accelerometer sensing device to the signal conditioning circuit, and a second plurality of electrical conductors for connecting the signal conditioning circuit to the said at least one lead.

8. An accelerometer assembly according to any preceding claim, comprising a silicone gel disposed in the cavity.

9. An accelerometer assembly according to any preceding claim, wherein at least two braces (26) are provided, the braces projecting from opposing ends of said housing.

10. An accelerometer assembly according to claim 9, wherein the electrically conductive leads project from a side of the housing which is intermediate said opposing ends.

11. An accelerometer assembly according to any preceding claim, comprising a raised surface (36) formed on the or each brace.

12. An accelerometer assembly according to any preceding claim, comprising a pedestal (52) on the backplate, the accelerometer sensing device being secured to the pedestal so as to be spaced from the surface of the backplate.
